# EUROPÄISCHE PATENTANMELDUNG

(11) **EP 0 657 371 A1**
(43) Veröffentlichungstag der Anmeldung: **14.06.1995**
(21) Anmeldenummer: 93810855.2
(22) Anmeldetag: 07.12.1993
(51) Int. Cl.: B65G 25/02, B65G 67/02, B65G 67/20, B60P 1/64

(54) **Einrichtung zum Verschieben von Lasten**

(71) Anmelder: WALTER MAROLF AG, CH-2577 Finsterhennen (CH)
(72) Erfinder: Schwarz, Edwin, CH-3252 Worben (CH)
(74) Vertreter: Fischer, Franz Josef

(57) **Zusammenfassung**

Eine Einrichtung (1) zum Verschieben von Lasten (2) auf einer im wesentlichen horizontalen Fläche (4), insbesondere von Transportfahrzeugen, besteht aus einem ersten Längsprofil (5) und einem zweiten Längsprofil (22), die in einem Kanal (3) in der Fläche (4) eingelassen sind. Das erste Längsprofil (5) ist über Hubelemente (17, 19) anhebbar und absenkbar, während das zweite Längsprofil (22) bezüglich des ersten Längsprofils (5) über eine Zylinderkolbeneinheit (27, 28) auf einer Gleitschicht (21) verschiebbar ist. Dadurch kann eine Last (2) schrittweise jeweils um ein Mass a verschoben werden.

## Beschreibung

Die vorliegende Erfindung bezieht sich auf eine Einrichtung zum Verschieben von Lasten auf einer im wesentlichen horizontalen Fläche, gemäss dem Oberbegriff des Patentanspruchs 1.

Im Güterverkehr weist der Trend ganz klar Richtung vollautomatischer Umschlag der Güter. Um dies verwirklichen zu können, werden die entsprechenden Güter in genormten Kontainerboxen oder auf genormten Paletten untergebracht, damit diese durch die entsprechenden Systeme beispielsweise in einem Hochregallager automatisch eingelagert bzw. daraus zur Verteilung kommissioniert werden können. Zum Transport der entsprechenden Güter, beispielsweise vom Hochregallager zu einem Verbraucher, müssen diese auf Fahrzeuge geladen, an den entsprechenden Ort gefahren und dort vom Fahrzeug abgeladen werden. Um ein Fahrzeug vollautomatisch beladen bzw. entladen zu können, müssen auf dem Fahrzeug Einrichtungen angebracht sein, die ein Verschieben der entsprechenden Stückgüter auf die bzw. von der entsprechenden Ladefläche ermöglicht.

Derartige Einrichtungen sind bekannt. Diese Einrichtungen bestehen in den meisten Fällen aus in der Ladefläche entsprechender Fahrzeuge untergebrachten Rollen und Ketten. Hierbei sind die Ketten als Endlosketten ausgebildet, wobei diese jeweils paarweise zusammenwirken und quer oder längs zur Ladefläche des entsprechenden Fahrzeuges angeordnet sind. Ein auf das Fahrzeug zu bringendes Stückgut wird über eine Laderampe zur Ladefläche des Fahrzeuges geführt, bis die entsprechenden Ketten das Stückgut erfassen können. Danach werden die Ketten angetrieben, das Stückgut wird auf die Ladefläche gezogen, wobei die Ketten oder das Stückgut auf Rollen abgestützt sind, die in der Ladefläche anhebbar und versenkbar angeordnet sind. Wenn das entsprechende Stückgut die richtige Lage auf der Ladefläche des Fahrzeuges erreicht hat, wird dieses auf der Ladefläche verankert.

Derartige auf der Ladefläche eines Fahrzeugs angebrachte Einrichtungen müssen, damit eine sichere Funktionsfähigkeit erhalten werden kann, regelmässig gewartet werden. Des weiteren muss darauf geachtet werden, dass die Rollen und Ketten nicht zu stark verschmutzen, d.h. sie müssen von Zeit zu Zeit gereinigt werden. Insbesondere dann muss eine Wartung und Reinigung sorgfältig durchgeführt werden, wenn diese Einrichtungen der freien Witterung ausgesetzt sind. Dies ist jedoch zeitaufwendig und demzufolge teuer.

Die Aufgabe der Erfindung besteht nun darin, eine Einrichtung zum Verschieben von Lasten zu schaffen, die vorzugsweise in Ladeflächen von Fahrzeugen eingebaut werden kann, die betriebssicher, wartungsfrei und einfach im Aufbau ist.

Erfindungsgemäss erfolgt die Lösung dieser Aufgabe durch die in der Kennzeichnung des Anspruchs 1 angegebenen Merkmale.

In vorteilhafter Weise umfassen die Verschiebemittel ein erstes und ein zweites Längsprofil, wobei das erste Längsprofil auf den im Kanal angeordneten Hubelementen angebracht ist, während das zweite Längsprofil auf dem ersten Längsprofil und bezüglich desselben in Verschieberichtung verschiebbar gelagert ist. Durch die Verwendung des zweiten Längsprofils wird eine durchgehende Fläche gebildet, die bezüglich der Ladefläche eines entsprechenden Fahrzeuges angehoben, verschoben und abgesenkt werden kann. Dadurch sind die im Kanal angeordneten Teile der Verschiebeeinrichtung durch diese Fläche des zweiten Längsprofiles geschützt.

In vorteilhafter Weise ist zwischen dem ersten Längsprofil und dem zweiten Längsprofil eine Gleitschicht angeordnet. Dies bedeutet, dass das zweite Längsprofil beim Verschieben bezüglich des ersten Längsprofils auf dieser Gleitschicht gleitet. Demzufolge sind zur Lagerung dieses zweiten Längsprofiles keine beweglichen mechanischen Teile erforderlich, die Gleitlagerung ist wartungsfrei.

Eine vorteilhafte Ausgestaltung der Erfindung besteht darin, dass die Hubelemente beidseits einer in Längsrichtung verlaufenden Mittelachse des ersten Längsprofils angeordnet sind. Dadurch wird gewährleistet, dass dieses Längsprofil in paralleler Ausrichtung zur Ladefläche angehoben wird und nicht verkantet.

In vorteilhafter Weise bestehen die Hubelemente aus druckmittelbetätigbaren Kolben, die in Zylinder eingesetzt sind. Hierbei sind die Zylinder in einfacher Weise durch Bohrungen gebildet, welche in einem Grundprofil angebracht sind, das im Kanalgrund befestigt ist. Die Zuführung des Druckmittels in diese Bohrungen erfolgt in vorteilhafter Weise durch eine im Grundprofil verlaufende Längsbohrung. Dadurch sind keine zusätzlichen Leitungen erforderlich.

Des weiteren weist das Grundprofil in vorteilhafter Weise Auflageflächen auf, auf welchen das erste Längsprofil im abgesenkten Zustand aufliegt, und ist mit Anschlägen ausgestattet, die mit Anschlägen des ersten Längsprofils zusammenwirken, wodurch die angehobene Lage der Kolben begrenzt ist.

Auch die Verschiebung des zweiten Längsprofils bezüglich des ersten Längsprofils erfolgt in vorteilhafter Weise über eine druckmittelbetätigbare Zylinder-Kolbeneinheit.

Derartige Zylinder-Kolbeneinheiten zum Anheben und Absenken der Längsprofile sowie zum Verschieben des zweiten Längsprofils bezüglich des ersten Längsprofils sind wartungsfrei und unempfindlich gegen Witterungseinflüsse.

Eine weitere vorteilhafte Ausgestaltung der Erfindung besteht darin, dass das erste Längsprofil mit einem längs dazu verlaufenden Hohlteil ausgestattet ist, in welchem die Hohlzylinder der Zylinder-Kolbeneinheit zum Verschieben des zweiten Längsprofiles bezüglich dem ersten Längsprofil untergebracht werden können. Dadurch sind diese Zylinder-Kolbeneinheiten gegen jegliche Einflüsse von aussen geschützt.

Durch die Wahl der profilformen wird für die ganze Einrichtung ein kastenförmiger Aufbau erreicht, der allseitig gut abgeschlossen ist, so dass die Gefahr einer Verschmutzung gering ist. Die Wahl der Form der Querschnitte der entsprechenden Profile ergibt ein optimales Zusammenwirken und schafft optimale Platzverhältnisse für das Unterbringen der entsprechenden Elemente.

Eine Ausführung der Erfindung wird nachfolgend anhand der beiliegenden Zeichnung beispielhaft näher erläutert.

Es zeigt:
**Fig. 1** einen Querschnitt durch die erfindungsgemässe Einrichtung im abgesenkten Zustand der beiden Längsprofile;
**Fig. 2** einen Querschnitt durch die erfindungsgemässe Einrichtung im angehobenen Zustand der Längsprofile;
**Fig. 3** einen Querschnitt der erfindungsgemässen Einrichtung durch den Zylinder zum Verschieben des zweiten Längsprofiles bezüglich des ersten Längsprofiles; und
**Fig. 4** eine Längsschnittdarstellung der erfindungsgemässen Einrichtung mit geschnittenem Verschiebeantrieb.

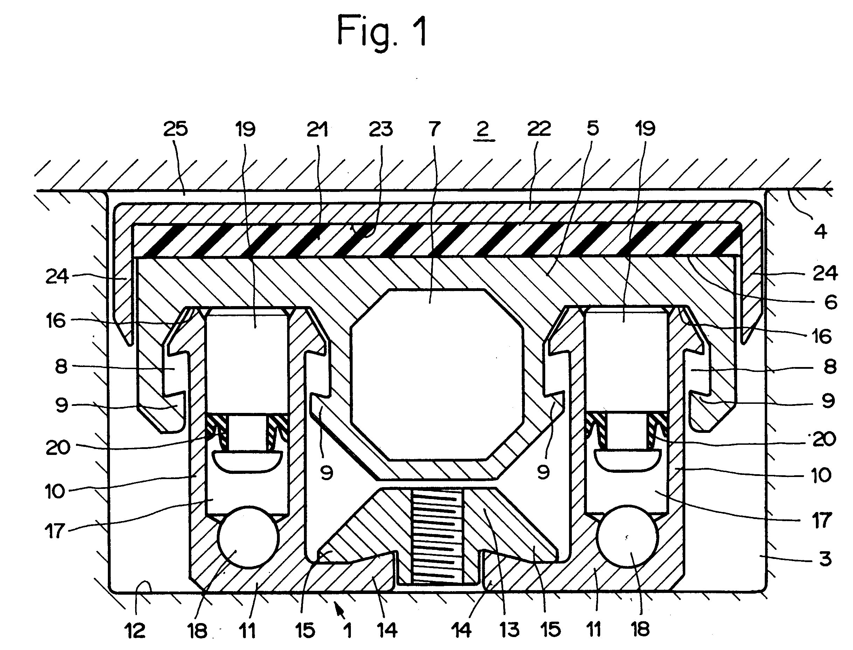

Eine erfindungsgemässe Einrichtung 1 zum Verschieben einer Last 2 ist, wie aus den Fig. 1 bis 3 ersichtlich ist, in einem Kanal 3 untergebracht. Dieser Kanal 3 ist in einer Fläche 4 angeordnet, die beispielsweise eine Ladefläche eines Transportfahrzeuges, wie Lastwagen, Eisenbahnwagen oder dergleichen sein kann. Hierbei sind mehrere derartige Kanäle 3 parallel nebeneinander angeordnet, ausgerichtet in der gewünschten Verschieberichtung, in welcher die entsprechenden Lasten auf- bzw. abgeladen werden sollen. Der gegenseitige Abstand der Kanäle 3 ist dabei so gewählt, dass mindestens ein Paar nebeneinanderliegender Einrichtungen 1 die ein Normmass aufweisende Last 2 anheben und verschieben kann.

Die Einrichtung 1 besteht aus einem ersten Längsprofil 5, welches eine gegen die Oberseite des Kanals 3 gerichtete Fläche 6 aufweist.

Längs des ersten Längsprofiles 5 und in dieses integriert verläuft ein im wesentlichen zentral angeordneter Hohlteil 7. Beidseits dieses Hohlteils 7 ist je eine parallel dazu verlaufende Längsrille 8 im ersten Längsprofil 5 angeordnet. Diese Längsrillen 8 sind jeweils an ihren beiden Rändern mit einem Vorsprung 9 versehen. In die Längsrillen 8 des ersten Längsprofils 5 hinein ragt je ein Schenkel 10 eines Grundprofils 11, welche ebenfalls als Längsprofile geformt sind. Die Grundprofile 11, die im vorliegenden Fall aus zwei Profilen bestehen, sind am Kanalgrund 12 des Kanals 3 befestigt, was durch eine Halteschiene 13 erfolgt, die in bekannter Weise im Kanalgrund 12 durch Verschraubung befestigt ist. Dadurch wird der jeweils zweite Schenkel 14 des Grundprofils 11 durch entsprechende Klauen 15 im Kanalgrund 12 gehalten.

Das erste Längsprofil 5 liegt im in Fig. 1 dargestellten abgesenkten Zustand auf Auflageflächen 16, die durch die Stirnflächen der Schenkel 10 der Grundprofile 11 gebildet werden.

In die Schenkel 10 der Grundprofile 11 sind von den Auflageflächen 16 her eine Reihe von parallel verlaufenden Bohrungen 17 angebracht. Der Grund dieser Bohrungen 17 mündet in eine Längsbohrung 18, wodurch alle Bohrungen 17 eines Grundprofils 11 miteinander verbunden sind.

In jede Bohrung 17 ist ein Kolben 19 eingesetzt, der gegen den Grund der Bohrung 17 mit einer Dichtung 20 versehen ist.

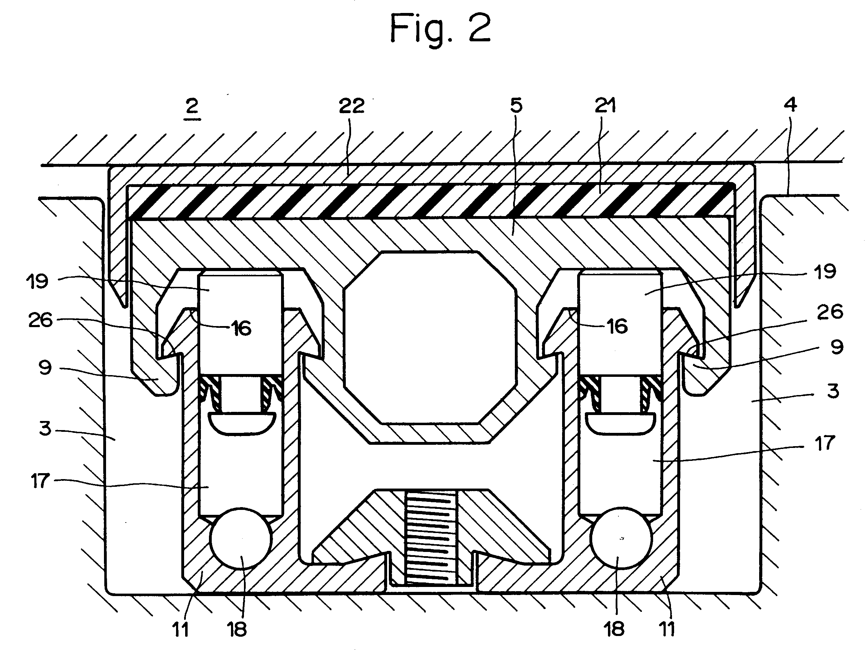

Durch ein nicht dargestelltes Hydraulikaggregat lässt sich über entsprechende Steuermittel ein Druckmittel in Form eines Hydrauliköls über die Längsbohrungen 18 in die Bohrungen 17 führen, wodurch die Kolben 19 angehoben werden können, und demzufolge das erste Längsprofil 5 angehoben wird (Fig. 2).

Auf der Fläche 6 des ersten Längsprofils 5 ist eine Gleitschicht 21 angebracht, die aus einer Platte aus ultrahochmolekularem Polyäthylen besteht. Auf diese Gleitschicht 21 ist ein zweites Längsprofil 22 aufgelegt, welches aus einem U-förmigen Profil gebildet ist. Dieses zweite Längsprofil 22 liegt mit seiner inneren Fläche 23 auf der Gleitschicht 21 auf, während die beiden Schenkel 24 des zweiten Längsprofils 22 längsseitig über das erste Längsprofil 5 ragen. Diese beiden Schenkel 24 und die Wand des Kanals 3 bilden einen engen Spalt, wodurch die Einrichtung 1 gegen die Fläche 4 hin gut abgedichtet ist.

Im in Fig. 1 dargestellten abgesenkten Zustand der Längsprofile 5 und 22 liegt die Last 2 auf der Fläche 4 auf, während zwischen dem zweiten Längsprofil 22 und der Last 2 ein Freiraum 25 besteht.

Durch Zuführen des Druckmittels durch die Längsbohrungen 18 in die Bohrungen 17 der Grundprofile 11 werden die Kolben 19 angehoben, wie aus Fig. 2 ersichtlich ist. Dadurch wird das erste Längsprofil 5 von den Auflageflächen 16 abgehoben. Das erste Längsprofil 5 wird dabei so weit angehoben, bis die als erste Anschläge wirkenden Vorsprünge 9 an zweiten Anschlägen 26 anstossen, die an den Schenkeln 10 der Grundprofile 11 angebracht sind. Dadurch wird die angehobene Lage des ersten Längsprofils 5 begrenzt. In diesem angehobenen Zustand steht das zweite Längsprofil 22 über die Fläche 4 vor, so dass die Last 2 nur noch auf dem zweiten Längsprofil 22 der Einrichtung 1 aufliegt und von der Fläche 4 abgehoben ist. Ein Ablassen des Druckmittels, das sich in der Längsbohrung 18 und den Bohrungen 17 befindet, hat zur Folge, dass die beiden Längsprofile 5 und 22 wieder in den abgesenkten Zustand geführt werden, wie er in Fig. 1 dargestellt ist.

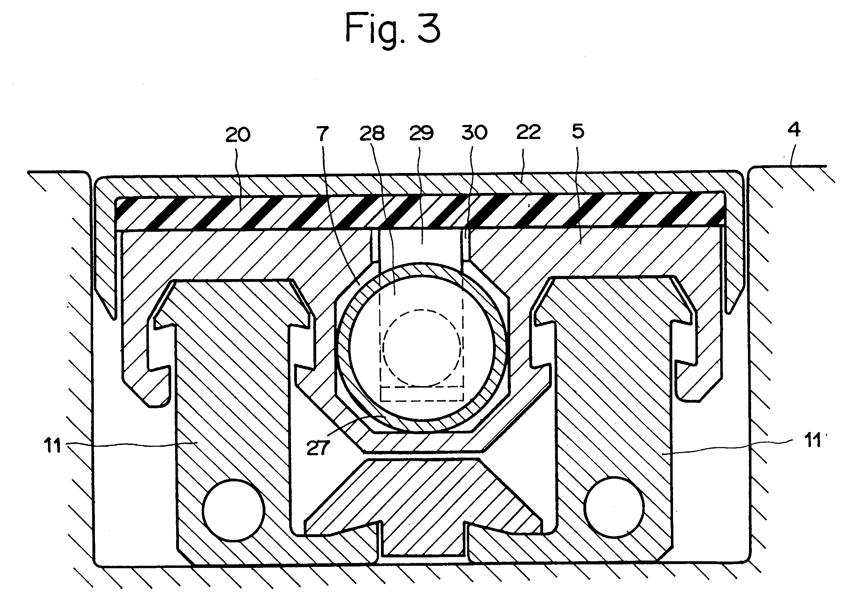

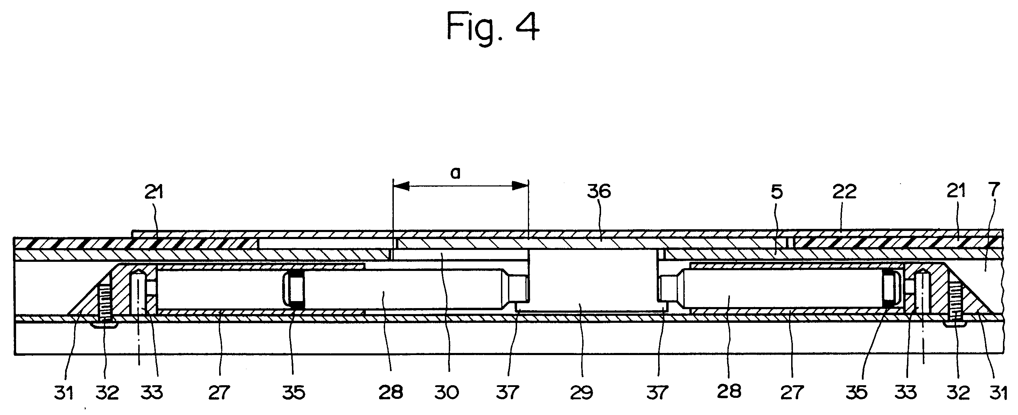

Wie aus Fig. 3 ersichtlich ist, ist im Hohlteil 7 in einem Bereich des ersten Längsprofils 5 ein Hohlzylinder 27 eingesetzt. In diesem Hohlzylinder 27 ist ein Kolben 28 längsverschiebbar angeordnet. Am zweiten Längsprofil 22 ist ein Steg 29 befestigt, welcher mit den Kolben 28 des Hohlzylinders 27 zusammenwirkt, wie nachfolgend im Zusammenhang mit Fig. 4 noch beschrieben wird. Der Steg 29 ragt durch eine Ausnehmung 30, welche das erste Längsprofil 5 und die Gleitschicht 21 durchdringt.

Wie in der Darstellung gemäss Fig. 4 ersichtlich ist, sind im Hohlteil 7 des ersten Längsprofils 5 zwei Hohlzylinder 27 angeordnet, welche einander zugewandt sind. Diese beiden Hohlzylinder 27 weisen an den einander abgewandten Enden ein Fussstück 31 auf, mit welchem die Hohlzylinder 27 fest verbunden sind, und welche mittels Verschraubung 32 am Hohlzylinder 27 befestigt sind. Durch das Fussstück 31 ist eine Zuleitungsöffnung 33 geführt, an welche nicht dargestellte Leitungen angeschlossen sind, über welche ein Druckmittel in Form eines Hydrauliköls in die Hohlzylinder 27 zugeleitet bzw. abgeleitet werden kann.

In die beiden Hohlzylinder 27 ist je ein Kolben 28 eingesetzt, die mit einer Dichtung 35 an ihrem der jeweiligen Zuleitungsöffnung 33 zugewandten Enden angeordnet sind. Zwischen die beiden Kolben 28 kommt der Steg 29 zu liegen, der an einer Zwischenplatte 36 befestigt ist, welche mit dem zweiten Längsprofil 22 fest verbunden ist. Der Steg 29 ragt durch die Ausnehmung 30 des ersten Längsprofils 5, während die Gleitschicht 21 entsprechend ausgenommen ist, um Platz für die Zwischenplatte 36 zu schaffen.

Der Steg 29 ist an seinem dem zweiten Längsprofil 22 abgewandten Bereich auf beiden Seiten mit je einem Nocken 37 versehen. Dieser Nocken 37 kommt jeweils unter den entsprechenden Kolben 34 zu liegen, wodurch das zweite Längsprofil 22 derart gehalten wird, dass es nicht weggehoben werden kann.

Durch wechselweises Zuführen des unter Druck stehenden Hydauliksöls aus der nicht dargestellten Hydraulikeinheit über die Zuleitungsöffnungen 33 in die Hohlzylinder 27 werden die Kolben 28 um das Mass a hin- und herbewegt, wodurch das zweite Längsprofil 22 auf der Gleitschicht 21 bezüglich des ersten Längsprofils 5 hin- und herverschoben werden kann.

Zum Verschieben einer Last 2 können nun die Längsprofile 5 und 22 über die Kolben 19 angehoben werden, wodurch die Last 2 von der Fläche 4 abgehoben wird und nur auf den zweiten Längsprofilen 22 aufliegt. Durch Betätigen eines der beiden Kolben 28 können danach die Längsprofile 22 um das Mass a in die gleiche Richtung verschoben werden, wobei der benachbarte Kolben 28 zurückweicht. Die Last 2 wird demzufolge um das Mass a verschoben. Danach wird das unter Druck stehende Hydrauliköl in den Bohrungen 17 abgelassen, wodurch die Längsprofile 5 und 22 abgesenkt werden, und den Zustand erreichen, wie er in Fig. 1 und 3 dargestellt ist. In diesem Zustand liegt die Last 2 nur auf der zwischen den Einrichtungen 1 sich befindenden Fläche 4 auf, während zwischen dem zweiten Längprofil 22 und der Last 2 ein Freiraum 25 entsteht. In diesem Zustand wird nun durch Betätigung des anderen Kolbens 28 das zweite Längsprofil 22 um das Mass a zurückverschoben, wonach das Verschieben der Last 2 um einen weiteren Schritt um das Mass a durch Wiederholung des beschriebenen Zyklus erfolgen kann.

Wenn sich nun die Last 2 über mehreren nebeneinander angeordneten Einrichtungen 1 befindet, kann durch entsprechende parallele Beaufschlagung der entsprechenden Kolben mit Druckmittel ein Parallelverschieben dieser Last 2 in eine Richtung erreicht werden.

Durch Umschalten der nicht dargestellten Steuermittel der Hydraulikeinheit kann eine entsprechende Last 2 durch entsprechendes Durchführen der oben angegebenen Schritte auch in die andere Längsrichtung der Einrichtung 1 verschoben werden. Dadurch kann sowohl ein Aufladen der Last 2 auf ein mit entsprechenden Einrichtungen 1 ausgerüstetes Fahrzeug wie auch ein Abladen in einfachster Weise erfolgen.

Eine derartige Einrichtung 1 kann beispielsweise eine Länge von 2,5 m haben. Über diese Länge sind je zehn beidseits der Mittelachse angeordnete Hubelemente 17, 19 verteilt. Bei einem Hydrauliköldruck von ca. 70 bar ergibt sich eine Hubkraft von etwa 2,5 Tonnen. Das Mass a, um welches die Last 2 in einem Zyklus verschoben werden kann, beträgt etwa 0,1 m.

Durch die gute Abdichtung der Einrichtung 1 gegenüber der Fläche 4 wird eine Verschmutzung der Einrichtung 1 weitgehend vermieden. Es kann möglich sein, dass trotzdem Wasser eindringt, wodurch dieses Wasser sich im Grund des Kanals 3 sammelt, und durch zusätzlich angebrachte Oeffnungen abfliessen kann. In den Bereich der Gleitschicht 21 eindringendes Wasser hat keinen Einfluss auf die Funktion sondern bewirkt sogar eine Verbesserung der Gleitreibung. Da alle Profile aus einer Aluminiumlegierung hergestellt sind, kann auch gefrierendes Wasser nicht daran haften bleiben.

Die erfindungsgemässe Einrichtung 1 ist durch die Verwendung von Längsprofilen sehr einfach im Aufbau, die Montage erfolgt lediglich durch Ineinanderschieben der entsprechenden Längsprofile, wodurch eine kostengünstige, wirkungsvolle und störunanfallige Einrichtung zum Verschieben von Lasten erreicht wird.

## Patentansprüche

1. Einrichtung zum Verschieben von Lasten auf einer im wesentlichen horizontalen Fläche, bestehend aus mindestens zwei im wesentlichen parallel in Verschieberichtung angeordneten und in Kanälen der Fläche eingelassenen Verschiebemittel, auf welchen die Lasten aufliegen und welche mit Antriebsmitteln zum Verschieben ausgestattet sind, dadurch gekennzeichnet, dass die Verschiebemittel (5, 22) auf einer Anhebeeinrichtung (17, 19) angeordnet sind, durch welche die Verschiebemittel (5, 22) anhebbar und absenkbar sind, dass die zu verschiebenden Lasten (2) im abgesenkten Zustand der Verschiebemittel (5, 22) auf der Fläche (4) aufliegen, während sie im angehobenen Zustand von der Fläche (4) abgehoben sind und nur auf den Verschiebemittel (5, 22) aufliegen, und dass die Verschiebemittel (5, 22) zum Verschieben der Lasten (2) durch die Antriebsmittel (27, 34) in Verschieberichtung im angehobenen Zustand um ein Mass (a) vorschiebbar und im abgesenkten Zustand um das entsprechende Mass (a) rückschiebbar sind.

2. Einrichtung nach Anspruch 1, dadurch gekennzeichnet, dass die Verschiebemittel ein erstes (5) und ein zweites Längsprofil (22) umfassen, wobei das erste Längsprofil (5) auf im Kanal (3) angeordneten Hubelementen (17, 19), durch welche die Anhebeeinrichtung gebildet ist, angebracht ist, während das zweite Längsprofil (22) auf dem ersten Längsprofil (5) und bezüglich desselben in Verschieberichtung verschiebbar gelagert ist.

3. Einrichtung nach Anspruch 2, dadurch gekennzeichnet, dass das erste Längsprofil (5) und das zweite Längsprofil (22) je eine einander zugewandte Fläche (6) bzw. (23) aufweisen, und dass zwischen den beiden Flächen (6) und (23) eine Gleitschicht (21) angeordnet ist, welche mit einem der beiden Längsprofile (5) oder (22) verbunden ist, während das andere beim Verschieben darauf gleitet.

4. Einrichtung nach Anspruch 2 oder 3, dadurch gekennzeichnet, dass die Hubelemente (17, 19) beidseits einer in Längsrichtung verlaufenden Mittelachse des ersten Längsprofils (5) angeordnet sind.

5. Einrichtung nach einem der Ansprüche 2 bis 4, dadurch gekennzeichnet, dass die Hubelemente aus druckmittelbetätigbaren Kolben (19) bestehen, welche in Zylindern (17) eingesetzt sind, die am Grund (12) des entsprechenden Kanals (3) befestigt sind.

6. Einrichtung nach Anspruch 5, dadurch gekennzeichnet, dass die Zylinder durch Bohrungen (17) gebildet sind, welche in einem Grundprofil (11) mit Abstand voneinander angebracht sind, dass die Bohrungen (17) durch eine im Grundprofil (11) verlaufende Längsbohrung (18) miteinander verbunden sind, durch welche ein Druckmittel in die Bohrungen (17) zuführbar bzw. von diesen wegführbar ist, und dass das Grundprofil (11) mit Auflageflächen (16), auf welchen das erste Längsprofil (5) im abgesenkten Zustand der Kolben (19) aufliegt, und mit ersten Anschlägen (9), welche mit entsprechend ausgebildeten zweiten Anschlägen (26) zusammenwirken, die am ersten Längsprofil (5) angebracht sind und wodurch die angehobene Lage der Kolben (19) begrenzt ist, versehen ist.

7. Einrichtung nach einem der Ansprüche 2 bis 6, dadurch gekennzeichnet, dass das zweite Längsprofil (22) bezüglich des ersten Längsprofils (5) über mindestens eine druckmittelbetätigbare Zylinder-Kolbeneinheit (27, 28) verschiebbar ist.

8. Einrichtung nach Anspruch 7, dadurch gekennzeichnet, dass die Zylinder-Kolbeneinheit aus zwei einander zugewandten Hohlzylindern (27) besteht, welche in einem längs des ersten Längsprofils (5) verlaufenden Hohlteil (7) untergebracht und befestigt sind, wobei in jeden Hohlzylinder (27) ein Kolben (28) eingesetzt ist, deren einander abgewandte Flächen abwechselnd druckbeaufschlagbar sind, und zwischen die Kolben (28) ein Steg (29) zu liegen kommt, der am zweiten Längsprofil (22) befestigt ist und durch eine Ausnehmung (30) im ersten Längsprofil (5) und der Gleitschicht (21) ragt.

9. Einrichtung nach einem der Ansprüche 3 bis 8, dadurch gekennzeichnet, dass das zweite Längsprofil (22) einen U-förmigen Querschnitt aufweist, dessen beide Schenkel (24) längsseitig über das erste Längsprofil (5) ragen und dieses von der horizontalen Fläche (4) her abdecken.

10. Einrichtung nach einem der Ansprüche 5 bis 9, dadurch gekennzeichnet, dass als Druckmittel zur Betätigung der Verschiebemittel und der Hubelemente ein Hydrauliköl verwendet wird.

11. Einrichtung nach einem der Ansprüche 3 bis 10, dadurch gekennzeichnet, dass die ersten und zweiten Längsprofile (5, 22) aus einer Aluminiumlegierung und die Gleitschicht (21) aus ultrahochmolekularem Polyäthylen gefertigt sind.
